# NEUE EUROPÄISCHE PATENTSCHRIFT

(11) **EP 0 647 760 B2**
(45) Veröffentlichungstag und Bekanntmachung des Hinweises auf die Entscheidung über den Einspruch: **22.05.2002**
(45) Hinweis auf die Patenterteilung: 24.03.1999
(21) Anmeldenummer: 94110625.4
(22) Anmeldetag: 07.07.1994
(51) Int. Cl.: E06B 3/54, E04F 13/14, E04F 13/08, E04B 2/88

(54) **Befestigungselement zur Verankerung in insbesondere aus Glas bestehenden Platten**
Fixing means for the anchorage in slabs, particularly made of glass
Elément de fixation pour l'ancrage dans des panneaux, notamment en verre

(30) Priorität: 08.10.1993 DE 4334286
(43) Veröffentlichungstag der Anmeldung: 12.04.1995
(73) Patentinhaber: fischerwerke Artur Fischer GmbH & Co. KG, 72178 Waldachtal (DE)
(72) Erfinder: Lind, Stefan, Dipl.-Ing., D-72178 Waldachtal (DE)

(56) Entgegenhaltungen:
- EP-A- 0 336 183
- EP-A- 0 439 706
- EP-A- 0 440 896
- EP-A- 0 452 746
- WO-A-93/15288
- DE-A- 3 302 701
- DE-A- 3 938 756
- DE-A- 4 130 823
- US-A- 4 793 112

## Beschreibung

Die Erfindung betrifft ein Befestigungselement gemäß der Gattung des Anspruches 1 für die Verankerung in vorzugsweise aus Glas oder ähnlichem Material bestehenden Platten.

Aus der DE 40 30 498 A1 ist ein Befestigungselement bekannt, das durch Aufschieben eines Spreizelementes auf den Spreizkonus eines Spreizbolzens in einem hinterschnittenen Bohrloch einer aus Naturstein, Marmor oder dgl. bestehenden Fassadenplatte verankerbar ist. Das Aufschieben des Spreizelementes auf den Spreizkonus erfolgt über ein als Kunststoffscheibe ausgebildetes Distanzelement durch Aufschrauben einer Mutter auf den Gewindeabschnitt des Spreizbolzens.

Zur Durchführung einer Befestigung in einem hinterschnittenen Bohrloch einer Fassadenplatte ist aus der DE 42 02 774 A1 ein weiteres aus Metall bestehendes Befestigungselement bekannt, bei dem das als geschlitzte Spreizhülse ausgebildete Spreizelement über einen Blindniet als Spreizbolzen verankerbar ist. Zum Aufspreizen und Verankern der Spreizhülse in der Hinterschneidung des Bohrloches wird der Setzkopf des Blindniets mit dem Nietdorn in den geschlitzten Teil der Innenbohrung der Spreizhülse eingezogen und vernietet.

In beiden Fällen wird das aus Metall bestehende Spreizelement gegen die Wandung des hinterschnittenen Bohrloches gepreßt. Bei einer aus Naturstein, Marmor oder dgl. bestehenden Fassadenplatte ist eine Aufnahme des von dem metallischen Spreizelement ausgehenden Spreizdruckes ohne weiteres möglich, da über die Struktur des Materials ein Spannungsabbau erfolgt. Nicht geeignet sind jedoch die bekannten Befestigungselemente für Verankerungen in sehr harten und unelastischen Platten wie beispielsweise Glas. Bei einem Einsatz der bekannten Befestigungselemente in solchen Platten besteht die Gefahr, daß sowohl bei der Montage als auch durch zusätzlich am Befestigungselement angreifenden Belastungen das Bohrloch ausbricht.

Der Erfindung liegt die Aufgabe zugrunde, ein Befestigungselement zu schaffen, das in aus Glas oder ähnlichem Material bestehenden Platten sicher verankerbar ist.

Die Lösung dieser Aufgabe wird mit den im Anspruch 1 angegebenen Merkmalen erreicht. Mit dem zwischen dem Spreizelement und einer Wandung der Hinterschneidung des Bohrloches angeordneten Preßelement wird ein direkter Kontakt des aus Stahl bestehenden Spreizelementes mit der Glasoberfläche vermieden. Das aus einem weichen Kunststoff bestehende Preßelement ist elastisch und/oder plastisch verformbar, so daß aus einer starren, unter Umständen zu einem Bruch des Glases führenden Punktbelastung eine weiche und Unebenheiten ausgleichende Flächenbelastung wird. Durch die sich daraus ergebende gleichmäßigere Druckverteilung auf eine größere Fläche lassen sich mit dem erfindungsgemäßen Befestigungselement auch in sehr spröden Platten wie Glas hohe Bruchlasten erzielen. Das Befestigungselement eignet sich somit für die verdeckte und sichere Montage von aus Glas oder ähnlichem Material bestehenden Fassaden platten. Da der Formschluß des Befestigungselementes im hinterschnittenen Bohrloch weiterhin auf Metallteilen beruht, wird auch im Brandfalle eine hohe Sicherheit gegen Herunterfallen der Platte erreicht.

Bei einem aus einem Drahtring bestehenden Spreizelement, das durch mehrere dachförmig abgebogene Ringabschnitte gebildet ist, ist es zweckmäßig, das Preßelement hülsenförmig auszubilden und mit einem Distanzteil zu verlängern, an dem ein auf der Außenfläche der Platte aufsitzender Flansch angeordnet ist. Beim Aufschrauben einer Mutter auf den Gewindeabschnitt des Spreizbolzens wird mit der Stirnfläche des Distanzteiles das Spreizelement auf den Spreizkonus aufgeschoben und gleichzeitig mit dem Spreizelement das Preßelement gegen die Wandung der Hinterschneidung des Bohrloches gepreßt. Der an der Außenfläche der Platte aufsitzende Flansch wird dabei gegen die Außenfläche der Glasplatte verspannt, so daß sowohl eine direkte Berührung der Mutter mit der Außenfläche der Glasplatte vermieden als auch eine Abdichtung des Bohrloches erreicht wird.

Um das Überstülpen des hülsenförmigen Preßelementes über das Spreizelement bei günstigen Durchmesserverhältnissen zu ermöglichen, kann die Innenwandung des Preßelementes mit einer das Spreizelement aufnehmenden Aussparung versehen sein, und das Preßelement mehrere, das Spreizelement überdeckende Wandsegmente aufweisen.

Der Spreizbolzen des erfindungsgemäßen Befestigungselementes kann als Blindniet und das Spreizelement als geschlitzte Spreizhülse ausgebildet sein. Bei einer derartigen Gestaltung des Befestigungselementes ist es zweckmäßig, als Preßelement einen Gummiring zu verwenden, der auf dem geschlitzten Teil der Spreizhülse angeordnet ist. Zur Verankerung wird das Befestigungselement in ein hinterschnittenes Bohrloch der Glasplatte soweit eingeschoben, bis die Stirnseite der Spreizhülse auf dem Bohrlochgrund aufsitzt. Danach wird der Blindniet mit seinem Setzkopf voraus durch eine Bohrung des auf die Rückseite der Platte zu befestigenden Gegenstandes und durch die Innenbohrung der Spreizhülse soweit eingeschoben, bis der Nietkopf an der Außenfläche des zu befestigenden Gegenstandes anliegt. Mit einer Nietzange wird über den Nietdorn der Setzkopf des Blindniets in den geschlitzten Teil der Innenbohrung der Spreizhülse eingezogen und vernietet. Durch die Stauchung und Ausbildung des Setzkopfes wird die Spreizhülse und der auf der Spreizhülse angeordnete Gummiring aufgeweitet und gegen die Bohrlochwandung der Hinterschneidung gepreßt. Der sich verformende Gummiring schafft somit eine weiche Zwischenlage zwischen der Wandung der Hinterschneidung und der Außenwandung der Spreizhülse.

Die Erfindung wird nachfolgend anhand in der Zeichnung dargestellter Ausführungsbeispiele näher erläutert.

Es zeigen:
- Figur 1: das in einer Glasplatte verankerte Befestigungselement,
- Figur 2: das Preßelement in einer bei dem Befestigungselement nach Figur 1 verwendeten Ausführungsform,
- Figur 2a: eine Draufsicht auf die Unterseite des Preßelementes nach Figur 2,
- Figur 3: eine Ausführungsform des Befestigungselementes mit einem Blindniet als Spreizbolzen vor der Verankerung und
- Figur 4: das Befestigungselement nach Figur 3 nach der Verankerung.

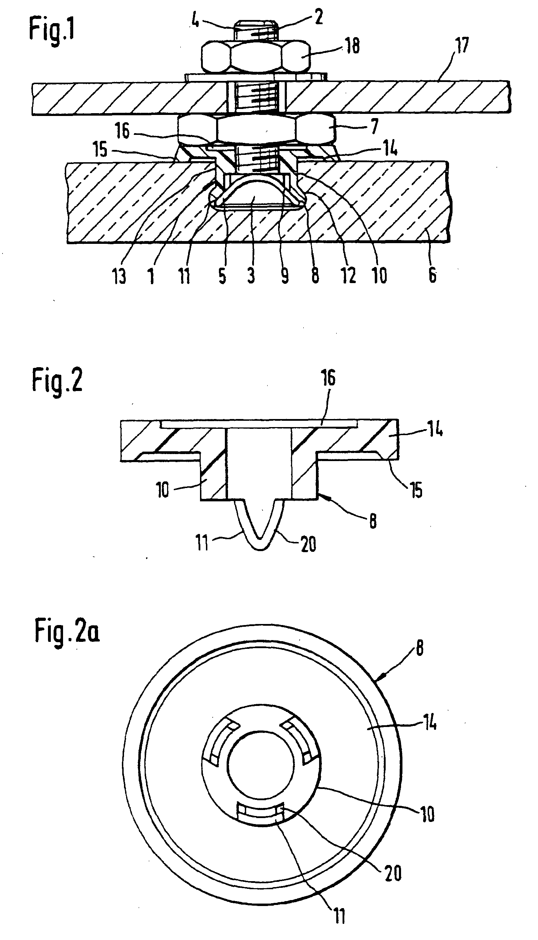

Das in Figur 1 dargestellte Befestigungselement 1 besteht aus einem Spreizbolzen 2, der an seinem vorderen Ende einen Spreizkonus 3 und an seinem hinteren Ende ein Gewinde 4 aufweist. Auf dem Spreizkonus 3 ist ein Spreizelement 5 angeordnet, das zur Verankerung des Befestigungselementes 1 in der Glasscheibe 6 auf den Spreizkonus 3 aufgedrückt wird. Im dargestellten Ausführungsbeispiel erfolgt das Aufdrükken des Spreizelementes 5 durch Aufdrehen der Mutter 7 auf den Gewindeabschnitt 4 des Spreizbolzens 2. Beim Aufdrehen der Mutter 7 wird das über das Spreizelement 5 gestülpte Preßelement 8 mit der Stirnseite 9 des Distanzteiles 10 axial auf dem Spreizkonus 3 gestaucht, so daß die wellenförmig gebogenen Ringabschnitte des Spreizelementes 5 die das Spreizelement überdeckenden Wandsegmente 11 des Preßelementes 8 gegen die Wandung der Hinterschneidung 12 des Bohrloches 13 drücken. Damit kommt das aus einem Metalldraht bestehende Spreizelement 5 nicht unmittelbar in Berührung mit der Wandung der Glasplatte 6. Da das Preßelement 8 aus einem weichen Kunststoff besteht, ergibt sich eine schonende und Spannungsspitzen vermeidende Verankerung des Befestigungselementes 1. Mit der Verspreizung des Spreizelementes 5 wird gleichzeitig der Flansch 14 des Preßelementes 8 gegen die Oberfläche der Glasplatte 6 verspannt. Dadurch wird über den als Dichtungslippe ausgebildeten Rand 15 des Flansches 14 einerseits eine Abdichtung des Bohrloches 13 erreicht und gleichzeitig ein direkter Kontakt der Mutter 7 mit der Oberfläche der Glasplatte 6 vermieden. Zur Erhöhung der Flexibilität des Flansches 14 weist dieser stirnseitig eine Vertiefung 16 auf.

Die Befestigung der Glasplatte 6 an einen Träger 17 einer Unterkonstruktion erfolgt über eine weitere Mutter 18, zwischen der und der Mutter 7 der Träger 17 verspannt ist.

Figur 2 und 2a zeigen die Ausführungsform des aus einem weichen Kunststoff hergestellten Preßelements B als Spritzgußteil. Das hülsenförmige Preßelement 8 ist mit dem Distanzteil 10 verlängert, an dem der Flansch 14 angeordnet ist. Gegenüber dem Rand 14 befinden sich die Wandsegmente 11 des Preßelementes 8, die vom Spreizelement gegen die Wandung der Hinterschneidung des Bohrloches in der Glasscheibe gedrückt werden. Die Anzahl der Wandsegmente 11 entspricht der Anzahl der Ringabschnitte des Spreizelementes 5. In die Innenwandung der Wandsegmente 11 sind Aussparungen 20 eingebracht, die das Spreizelement 5 aufnehmen.

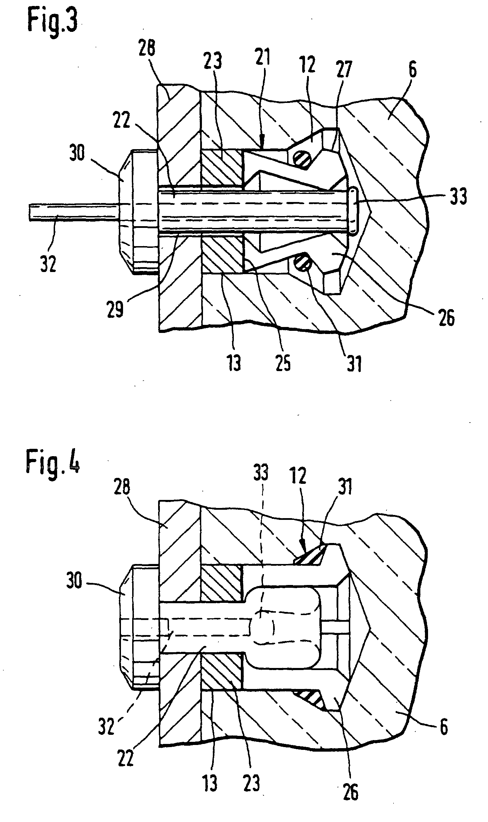

Die Ausführungsform des Befestigungselementes 21 nach Figur 3 und 4 weist als Spreizbolzen einen Blindniet 22 auf. Figur 3 zeigt den Zustand des Befestigungselementes 21 vor der Verankerung in der Hinterschneidung 12 des Bohrloches 13, wobei die Spreizhülse 23 in das Bohrloch 13 eingeschoben ist. Die durch Schlitze 25 sich ergebenden Spreizsegmente 26 der Spreizhülse 23 sind zum Einführen des Befestigungselementes soweit nach innen gebogen, daß der auf der Außenfläche der Spreizsegmente 26 angeordnete umlaufende Wulst 27 einen dem Bohrlochdurchmesser in der Glasplatte 6 entsprechenden Durchmesser aufweist. Nach dem Anlegen des zu befestigenden Gegenstandes 28, beispielsweise ein Haken, Befestigungswinkel oder dgl., an die Rückseite der Glasplatte 6 wird durch die Innenbohrung 29 der Spreizhülse 23 der Blindniet 22 soweit eingesteckt, bis der Nietkopf 30 an der Außenfläche des zu befestigenden Gegenstandes 28 anliegt. Auf den Spreizsegmenten 26 ist als Preßelement ein Gummiring 31 übergestülpt.

In Figur 4 ist die formschlüssige Verankerung der Spreizhülse 23 in der Hinterschneidung 12 des Bohrloches 13 dargestellt. Die Aufweitung der Spreizsegmente 26 erfolgt durch Einziehen des am Nietdom 32 angeordneten Setzkopfes 33 in den Blindniet 22. Zum Einziehen und Vernieten wird eine Nietzange (nicht dargestellt) verwendet, mit der nach dem Einziehen des Setzkopfes 33 und der Vemietung der Nietdorn 32 innerhalb der Blindniet 22 abgerissen wird. Durch die Wulstbildung des Blindniets 22 werden die Spreizsegmente 26 in die Hinterschneidung 12 eingebogen. Dabei wird der Gummiring 31 gegen die Wandung der Hinterschneidung 12 gepreßt, so daß sich eine die Unebenheiten ausfüllende Verformung ergibt. Gleichzeitig wird mit dem verpreßten Gummiring 31 eine Berührung der Spreizsegmente 26 mit der Bohrlochwandung vermieden.

## Patentansprüche

1. Befestigungselement mit aus Metall bestehendem Spreizbolzen und Spreizelement, wobei das Spreizelement durch Einziehen und/oder Aufschieben auf den Spreizkonus des Spreizbolzens in einem eine Hinterschneidung aufweisenden Bohrloch einer insbesondere aus Glas oder ähnlichem Material bestehenden Platte verankerbar ist, **dadurch gekennzeichnet, dass** das Befestigungselement (1) ein elastisch und/oder plastisch verformbares Preßelement (8, 31) aus weichem Kunststoff aufweist, das bei verankertem Befestigungselement (1) zwischen dem Spreizelement (5, 23) und einer Wandung der Hinterschneidung des Bohrlochs angeordnet ist.

2. Befestigungselement nach Anspruch 1, **dadurch gekennzeichnet, daß** das Preßelement (8) hülsenförmig ausgebildet und mit einem Distanzteil (10) verlängert ist, an dem ein auf der Außenfläche der Platte (6) aufsitzender Flansch (14) angeordnet ist.

3. Befestigungselement nach Anspruch 2, **dadurch gekennzeichnet, daß** die Innenwandung des Preßelementes (8) mit das Spreizelement (5) aufnehmenden Aussparungen (20) versehen ist.

4. Befestigungselement nach Anspruch 2, **dadurch gekennzeichnet, daß** das Preßelement (8) mehrere, das Spreizelement (5) überdeckende Wandsegmente (11) aufweist.

5. Befestigungselement nach Anspruch 1, **dadurch gekennzeichnet, daß** der Spreizbolzen als Blindniet (22) und das Spreizelement als geschlitzte Spreizhülse (23) ausgebildet ist, und daß das Preßelement ein auf dem geschlitzten Teil der Spreizhülse (23) angeordneter Gummiring (31) ist.

## Claims

1. Fastening element comprising an expander bolt and an expansible element each consisting of metal, the expansible element being anchorable, in a drilled hole having an undercut in a panel that consists in particular of glass or of a similar material, by retracting and/or pushing it onto the expander cone of the expander bolt, **characterized in that** the fastening element (1) comprises a resiliently and/or plastically deformable compression element (8, 31) made of a soft plastics material, which compression element is arranged between the expansible element (5, 23) and a wall of the undercut of the drilled hole when the fastening element (1) has been anchored.

2. Fastening element according to claim 1, **characterized in that** the compression element (8) is of sleeve-shaped construction and is extended by means of a spacer portion (10), on which there is arranged a flange (14) that rests on the outer surface of the panel (6).

3. Fastening element according to claim 2, **characterized in that** the inner wall of the compression element (8) is provided with recessed portions (20) that receive the expansible element (5).

4. Fastening element according to claim 2, **characterized in that** the compression element (8) has a plurality of wall segments (11) that overlie the expansible element (5).

5. Fastening element according to claim 1, **characterized in that** the expander bolt is in the form of a blind rivet (22) and the expansible element is in the form of a slit expansible sleeve (23), and the compression element is a rubber ring (31) arranged on the slit portion of the expansible sleeve (23).

## Revendications

1. Elément de fixation comportant un boulon expansible constitué de métal et un élément expansible, dans lequel, par tirage et/ou par enfilage sur le cône d'expansion du boulon expansible, l'élément expansible peut s'ancrer dans un trou, présentant un chambrage, d'un panneau constitué en particulier de verre ou matériau semblable, **caractérisé par le fait que** l'élément de fixation (1) présente un élément d'appui (8, 31) déformable élastiquement et/ou plastiquement qui est disposé entre l'élément expansible (5, 23) et la paroi du trou à chambrage, l'élément de fixation étant fixe.

2. Élément de fixation selon la revendication 1, **caractérisé par le fait que** l'élément d'appui (8) a la forme d'une douille et qu'il est prolongé par une partie intercalaire (10) sur laquelle est disposé un flasque (14) qui repose sur la surface extérieure du panneau (6).

3. Élément de fixation selon la revendication 2, **caractérisé par le fait que** la paroi intérieure de l'élément d'appui (8) présente des évidements (20) dans lesquels se loge l'élément expansible (5).

4. Élément de fixation selon la revendication 2, **caractérisé par le fait que** l'élément d'appui (8) présente plusieurs segments de paroi (11) qui recouvrent l'élément expansible (5).

5. Élément de fixation selon la revendication 1, **caractérisé par le fait que** le boulon expansible est conçu sous forme d'un rivet (22) accessible d'un seul côté et l'élément expansible, sous forme d'une douille expansible fendue, et que l'élément d'appui est une bague de caoutchouc (31) disposée sur la partie fendue de la douille expansible (23).
